# EUROPÄISCHE PATENTSCHRIFT

(11) **EP 3 145 892 B1**
(45) Veröffentlichungstag und Bekanntmachung des Hinweises auf die Patenterteilung: **02.01.2019**
(21) Anmeldenummer: 16709338.4
(22) Anmeldetag: 08.03.2016
(51) Int. Cl.: C04B 28/14, C04B 28/16

(54) **BAUCHEMISCHE FORMULIERUNG**
CONSTRUCTION CHEMICAL FORMULATION
FORMULE DE PRODUIT CHIMIQUE DE CONSTRUCTION

(30) Priorität: 09.03.2015 EP 15158268
(43) Veröffentlichungstag der Anmeldung: 29.03.2017
(73) Patentinhaber: Uzin Utz AG, 89079 Ulm (DE)
(72) Erfinder: WILDE, Markus, 89269 Vöhringen-Illerzell (DE); SCHILLER, Sven, 89335 Ichenhausen (DE); GRETZ, Markus, 89312 Günzburg (DE); HAMBERGER, Robert, 89081 Ulm (DE); TSALOS, Johannis, 89081 Ulm (DE)
(74) Vertreter: Isarpatent
(86) Internationale Anmeldenummer: PCT/EP2016/054875
(87) Internationale Veröffentlichungsnummer: WO 2016/142365

(56) Entgegenhaltungen:
- WO-A1-2014/108435
- WO-A1-2014/108436
- WO-A1-2015/150319

## Beschreibung

Die vorliegende Erfindung betrifft eine bauchemische Formulierung, enthaltend ein Bindemittel auf Basis von Calciumsulfat, einen Ettringitbildner, einen Aktivator und einen Füllstoff, sowie die Verwendung der bauchemischen Formulierung zur Herstellung von dünnschichtigen Ausgleichsmassen, selbstverlaufenden und standfesten Spachtelmassen, Estrichbindemitteln oder Estrichmörteln, Fliesenklebemörteln, Fugenmörteln und Dichtungsschlämmen.

Die Verlegung von Bodenbelägen wie z.B. PVC- oder Kautschukbelägen, stellt besondere Anforderungen an den Untergrund. Zum Ausgleichen von Boden- bzw. Rohbodenunebenheiten werden Ausgleichs-/Spachtelmassen oder Estriche eingesetzt. Diese sorgen unter anderem für eine Nivellierung und für eine konstante Saugfähigkeit des Untergrunds. Die Saugfähigkeit ist insbesondere für die nachfolgende Verklebung von Bodenbelägen mit wässrigen Klebstoffsystemen (z.B. Dispersionsklebstoffen) von großer Bedeutung. Die funktionale, schadensfreie Verklebung von Bodenbelägen auf Ausgleichs-/Spachtelmassen kann über die Bestimmung von Schälwerten geprüft werden. Im Allgemeinen sind für eine funktionale Beklebung Schälwerte größer als 0,6 N/mm nach 24 Stunden notwendig. Des Weiteren sollten sich diese Werte kontinuierlich erhöhen und vorzugsweise mindestens 1 N/mm (nach ca. 4-7 Tagen) betragen. Darüber zeigt sich eine funktionale, schadensfreie Verklebung durch eine dauerhafte Anhaftung des Belags zum Untergrund (keine Ablösungen des Belags) sowie durch ein homogenes Oberflächenbild (keine Blasenbildung im Belag).

Soll ein schneller Baufortschritt realisiert werden, kommen häufig zementäre Spachtel-/Ausgleichsmassen zum Einsatz, die gegebenenfalls eine Belegung bereits nach 1 h erlauben. Solche zementären Systeme enthalten verschiedene Zemente und Spezialzemente, um überschüssiges Anmachwasser chemisch zu binden. Da mit der Zementhydratation eine Volumenveränderung einhergeht, erhärten solche Systeme teilweise mit starken Spannungen. Daher können zementäre Systeme auf labilen Untergründen nur eingeschränkt eingesetzt werden. Auf Grund der Sprödigkeit der erhärteten Masse besteht die Gefahr der Rissbildung und Ablösung der Ausgleichs- bzw. Spachtelmasse vom Untergrund.

Derartige Zement-basierte Spachtelmassen oder Estrich-Zusammensetzungen, welche die oben genannten Nachteile aufweisen, sind in den nachfolgend aufgeführten Publikationen beschrieben.

Die US 2008/0141907 A1 offenbart Estriche, umfassend Sand aus recycliertem Glasmüll, Calciumsulfoaluminat-Zement, Kalksteinpulver, Portland-Zement, Calciumsulfat-Hemihydrat und andere Additive, z.B. Beschleuniger oder Verzögerer.

Die US 2012/0037046 A1 beschreibt eine Estrich-Zusammensetzung, unter anderem umfassend ein zementäres Bindemittel aus Calciumsulfoaluminat-Zement, Portland-Zement und Calciumsulfat.

Die WO 2008/003672 A1 betrifft Spachtelmassen, die als essentielle Bestandteile Portland-Zement, Füllstoffe oder Pigmente, sowie eine Bindemittelkomponente enthalten. Dabei werden zwei Ausführungsformen unterschieden, nämlich zum einen Spachtelmassen auf zementärer Basis mit Zement als Hauptbindemittel. Die Spachtelmassen auf zementärer Basis enthalten als Bindemittelkomponente eine Mischung aus Aluminatzement (20 bis 40 Gew.-%, bezogen auf die gesamte Spachtelmasse) und eine Quelle reaktiver Sulfate (z.B. Calciumsulfat) in einer Menge von 2 bis 15 Gew.-%, bezogen auf die gesamte Spachtelmasse. Zum anderen beschreibt die WO 2008/003672 A1 Gips-basierte Spachtelmassen, die als Bindemittelkomponente eine Quelle reaktiver Sulfate, jedoch keinen Aluminatzement enthalten. Spachtelmassen, die Calciumsulfat-basierte Bindemittel als Hauptbindemittelkomponente und zudem Aluminatzement enthalten, sind in der WO 2008/003672 A1 somit nicht offenbart.

Die WO 2014/108436 beschreibt eine Bindemittelzusammensetzung, die Calciumsulfat, Portlandzement, Calciumaluminatzement, Zeolith und/oder Metakaolin umfasst, wobei das Calciumsulfat in einer Menge von ≥ 50 Gew.-Teilen enthalten ist, bezogen auf die Gesamtmenge der Komponenten (a) bis (d). Die Bindemittelzusammensetzung ist nach dem Aushärten wasserbeständig und ergibt einen wasserfesten Baustoff. Die WO 2014/108435 beschreibt ebenfalls eine wasserbeständige Bindemittelzusammensetzung, die Anhydrit, Portlandzement, Calciumaluminatzement, Zeolith und/oder Metakaolin und ein Sulfatsalz umfasst. Die WO 2015/150319 beschreibt eine Gipszusammensetzung, die ein Gemisch aus Calciumaluminat und Calciumsulfat-hemihydrat, Anhydrit oder Calciumsulfat-dihydrat im Gewichtsverhältnis 1:1 bis 1:5 sowie Füllstoffe enthält.

Calciumsulfat-basierte Bindemittelsysteme mit einem Calciumsulfat-basierten Bindemittel als Hauptbindemittelkomponente weisen gegenüber zementären Bindemittelsystemen zahlreiche Vorteile auf. Aufgrund der gebildeten Hydratationsprodukte erhärten solche Spachtel-/Ausgleichsmassen im Allgemeinen dimensionsstabiler als zementäre Produkte. Calciumsulfat-basierte Produkte zeigen darüber hinaus eine verminderte Rissneigung, so dass ein Einsatz auf labilen Untergründen, Altuntergründen oder Renovierungsuntergründen (z.B. Gussasphalt, Altklebstoff) ermöglicht wird.

Nachteilig bei den aus dem Stand der Technik bekannten Calciumsulfat-enthaltenden Bauprodukten, die Calciumsulfat-basierte Bindemittel als Hauptbindemittelkomponente enthalten, ist außerdem die langsame Trocknung. Dadurch wird die Zeit bis zum Erreichen der Belegreife deutlich verlängert und der Baufortschritt verzögert. Ursächlich für die verlängerte Trocknungszeit von bekannten Calciumsulfat-basierten Bauprodukten mit Calciumsulfat-basierten Bindemittelsystemen ist der Hydratationsprozess. Während in den Hydratationsprodukten zementärer Bindemittel/Bindemittelsysteme Wasser in den Hydratphasen chemisch gebunden wird, kommt es bei der Hydratation von Calciumsulfat-Bindemitteln zu einer Ausfällung der Hydratationsprodukte aus einer übersättigten Lösung. In Calciumsulfat-basierten Systemen muss das überschüssige Anmachwasser überwiegend an die Umgebung abgegeben werden. Ausgleichs- und Spachtelmassen auf Calciumsulfat-Basis, die eine Belegreife in einer Zeit unterhalb von 12-24 Stunden gewährleisten, sind daher nach dem Stand der Technik nicht bekannt. Die Dauer bis zur Belegreife eines Untergrunds entspricht dabei dem Zeitraum zwischen Applikation der Ausgleichs-/Spachtelmasse und dem Zeitpunkt, ab dem eine funktionale Verklebung von Bodenbelägen möglich ist. Im Allgemeinen sind für eine funktionale Beklebung Schälwerte größer als 0,6 N/mm nach 24 Stunden notwendig. Des Weiteren sollten sich diese Werte kontinuierlich erhöhen und vorzugsweise mindestens 1 N/mm (nach ca. 4-7 Tagen) betragen. Bei Erreichung der Belegreife ist eine ausreichend geringe Restfeuchte vorhanden bzw. es kann durch die Applikation des Klebstoffs eingebrachtes Wasser kompensiert werden, so dass eine schadensfreie Verklebung möglich wird. Eine schadensfreie Verklebung liegt dann vor, wenn es zu keiner Blasenbildung im Bodenbelag kommt und dieser ohne Ablösungen dauerhaft auf dem Untergrund haftet.

Zusammenfassend können also die Nachteile von bauchemischen Formulierungen aus dem Stand der Technik wie folgt beschrieben werden: Zementäre Systeme führen zwar zu einer schnellen Erhärtung, diese erfolgt jedoch nicht spannungsfrei. Sprödigkeit und die Gefahr der Rissbildung sind die Folgen. Rein Calciumsulfat-basierte Systeme erhärten zu langsam, um schnell die erforderliche Belegreife für einen zügigen Baufortschritt zu ergeben.

Aufgabe der Erfindung ist es somit Formulierungen für Bauprodukte bereitzustellen, die eine schnelle Trocknung und somit das schnelle Erreichen der Belegreife (insbesondere bereits nach weniger als 6 h) ergeben. Auf diese Weise sollen die Formulierungen einen zügigen Baufortschritt ermöglichen. Weiterhin ist es Aufgabe der Erfindung Formulierungen für die Herstellung von Ausgleichsmassen, selbstverlaufenden und standfesten Spachtelmassen, Estrichbindemitteln oder Estrichmörteln sowie Fliesenklebemörtel, Fugenmörtel und Dichtungsschlämmen. bereitzustellen, die die oben genannten Eigenschaften aufweisen.
Die vorliegende Aufgabe wird gelöst durch eine bauchemische Formulierung, umfassend
a) 40 bis 55 Gew.-% mindestens eines Bindemittels auf Basis von Calciumsulfat;
b) 3 bis 10 Gew.-% mindestens eines Ettringitbildners;
c) 0,1 bis 2 Gew.-% mindestens eines Aktivators, um einen pH-Wert von 9 bis 14 in der bauchemischen Formulierung einzustellen; und
d) 8 bis 60 Gew.-% mindestens eines Füllstoffes;
e) 0,1 bis 10 Gew.-% mindestens eines redispergierbaren Dispersionspulvers
   jeweils bezogen auf die Gesamtmasse der Formulierung, wobei sich die Mengen zu 100 Gew.-% ergänzen.
Gemäß einer Ausführungsform enthält die Formulierung im Wesentlichen kein Metakaolin und/oder im Wesentlichen keinen Zeolith (Alumosilikat, insbesondere der Zusammensetzung Mⁿ⁺_{x/n} [(AlO₂)⁻ ₓ (SiO₂)_{y}]·z H₂O, worin M ein Kation eines Alkali- oder Erdalkalimetalls, NH₄⁺ und/oder H⁺ ist, n für 1 oder 2 steht, x und y für eine Zahl von 1 bis 200 stehen). Der Ausdruck im Wesentlichen" bedeutet hier weniger als 2 Gew.-%, insbesondere weniger als 1 Gew.-% oder weniger als 0,5 Gew.-% und insbesondere 0 Gew.-%, an Metakaolin oder Zeolith oder eines Gemisches davon.
In einer bevorzugten Ausführungsform der erfindungsgemäßen bauchemischen Formulierung ist das Bindemittel ausgewählt unter Calciumsulfat-Hemihydrat (Calciumsulfat-α-Hemihydrat und/oder Calciumsulfat-β-Hemihydrat), Calciumsulfat-Anhydrit, Calciumsulfat-Dihydrat und Mischungen von zwei oder mehreren davon. Vorzugsweise ist das Bindemittel Calciumsulfat-Hemihydrat. Das Bindemittel ist insbesondere bevorzugt in einer Menge von 41 bis 55 Gew.-%, bezogen auf die Gesamtmasse der Formulierung, in der erfindungsgemäßen bauchemischen Formulierung enthalten.

Weiterer Bestandteil der erfindungsgemäßen Formulierung ist mindestens ein Ettringitbildner. Der Ettringitgitbildner ist in einer Menge von 3 bis 10 Gew.-%, bezogen auf die Gesamtmasse der Formulierung, in der Formulierung enthalten. Bevorzugt ist ein Gehalt an Ettringitbildner von 3 bis 8 Gew.-%. Vorzugsweise ist der Ettringitbildner ausgewählt unter Calciumsulfoaluminatzement (CSA-Zement), Natriumaluminat, Tonerdeschmelzzement, Aluminiumsulfat und Mischungen davon. Ganz besonders bevorzugt ist die Verwendung von Calciumsulfoaluminatzement, Tonerdeschmelzzement oder Mischungen davon als Ettringitbildner.

Bevorzugt ist ein Tonerdeschmelzzement der chemischen Zusammensetzung 35-71 Gew.-% Al₂O₃, 27-40 Gew.-% CaO, 0,5-5 Gew.-% SiO₂ und 0,1-20 Gew.-% Fe₂O₃ oder CSA-Zement der chemischen Zusammensetzung 27-31 Gew.-% Al₂O₃, 36-41 Gew.-% CaO, 2-7 Gew.-% SiO₂, ≤ 1,5 Gew.-% Fe₂O₃, 12-16 Gew.-% SO₃ und ≤ 5 Gew.-% MgO.

Ettringit ist ein Mineral aus der Mineralklasse der wasserhaltigen Sulfate mit fremden Anionen. Es kristallisiert mit der chemischen Zusammensetzung Ca₆Al₂[(OH)₁₂|(SO₄)₃]·26 H₂O und entwickelt meist gut ausgeprägte, prismatische oder nadelige Kristalle. Nach der in der Bauchemie üblicheren Schreibweise lautet die oxidische Summenformel: 3CaO · Al₂O₃ · 3CaSO₄ · 32H₂O. Unter Ettringitbildung ist im Kontext dieser Erfindung die Entstehung von Ettringit, ausgehend von den Bestandteilen a) und b) der erfindungsgemäßen Formulierung zu verstehen. Die Bildung von Ettringit aus den genannten Komponenten a) und b) stellt eine vorteilhafte Möglichkeit dar, Wasser zu binden.

Der Anteil an Calciumsulfatbindemittel und Ettringitbildner an der Gesamtformulierung beträgt vorzugsweise etwa 40-60 Gew.-%.

Durch die Zugabe eines Ettringitbildners zur erfindungsgemäßen Formulierung kann, mittels der oben aufgezeigten Bindung von Wasser, eine schnelle Trocknung und Abbinden der aufgetragenen Ausgleichsmassen, selbstverlaufenden und standfesten Spachtelmassen, Estrichbindemitteln oder Estrichmörteln sowie Fliesenklebemörteln, Fugenmörteln und Dichtungsschlämmen sichergestellt werden. Die erfindungsgemäßen Formulierungen ermöglichen eine rasche Belegreife von weniger als 6 h.

Die erfindungsgemäße bauchemische Formulierung enthält mindestens einen Aktivator, der vorzugsweise ausgewählt ist unter Portland-Zement, Calciumhydroxid, Natriumhydroxid, Kaliumhydroxid, Alkaliwassergläsern und Mischungen davon. Insbesondere bevorzugt ist Portland-Zement oder Calciumhydroxid oder Mischungen davon.

Der oder die Aktivatoren werden zugegeben, um den pH-Wert der bauchemischen Formulierung zu steuern, vorzugsweise zu erhöhen. Beispielsweise wird eine Menge an Aktivator zur bauchemischen Formulierung gegeben, die ausreichend ist, um einen pH-Wert von 9 bis 14 einzustellen. Insbesondere bevorzugt ist es, wenn durch die Zugabe des Aktivators ein pH-Wert von 11 bis 14 eingestellt werden kann. Die Einstellung des pH-Werts durch die Aktivatorzugabe auf einen Wert von 9 bis 14, insbesondere 10 bis 14, hat den Effekt, dass bei einem pH-Wert im genannten Bereich die Ettringitbildung in der bauchemischen Formulierung erfolgt. Vorteilhafterweise erfolgt die Ettringitbildung also nicht spontan, sondern gesteuert durch Aktivatorzugabe.

Der Aktivator ist in der bauchemischen Formulierung in einer Menge von 0,1 bis 2 Gew.-%, bezogen auf die Gesamtmasse der Formulierung, enthalten.

In der erfindungsgemäßen Formulierung sind neben den Komponenten a) bis c) Füllstoffe in einer Menge von 8 bis 60 Gew.-%, bezogen auf die Gesamtmasse der Formulierung, enthalten. Die Menge an Füllstoffen beträgt vorzugsweise 30 bis 60 Gew.-%, insbesondere 35 bis 55 Gew.-%, bezogen auf die Gesamtmasse der Formulierung. Beispiele für Füllstoffe sind Quarzsande, Kalkstein und Kalksteinmehle, Dolomit, Talk, Glimmer, sowie Leichtfüllstoffe wie z.B. Blähglasgranulate oder Blähtone. Darüber hinaus sind auch latent hydraulische Bestandteile wie Puzzolane, Flugaschen oder Hochofenschlacke geeignet. Die mittlere Korngröße des Füllstoffs beträgt vorzugsweise 0,001 bis 10 mm, insbesondere 0,005 bis 8 mm. Bevorzugte Füllstoffe sind Sand oder Kalksteinmehl und Mischungen davon.
In der erfindungsgemäßen Formulierung sind neben den Komponenten a) bis d) redispergierbare Dispersionspulver in einer Menge von 0,1 bis 10 Gew.-%, bezogen auf die Gesamtmasse der Formulierung, enthalten. Die Menge an redispergierbarem Dispersionspulver beträgt vorzugsweise 0,5 bis 10 Gew.-%, insbesondere 1,0 bis 10 Gew.-%, bezogen auf die Gesamtmasse der Formulierung.
Redispergierbare Dispersionspulver können Polymere oder Copolymere auf Basis von Vinylaromaten, wie Styrol, Vinylestern von C₁-C₁₅ Alkylcarbonsäuren, Dienen, Estern der (Meth)acrylsäure mit C₁-C₁₂-Alkanolen, Vinylhalogeniden und/oder Olefinen sein. Bevorzugt sind Vinylestern von C₁-C₁₅ Alkylcarbonsäuren, Copolymeren von Vinylestern von C₁-C₁₅ Alkylcarbonsäuren mit Olefinen oder Copolymeren von Estern der (Meth)acrylsäure mit C₁-C₁₂-Alkanolen mit Styrol. Als Beispiele seien Ethylen-Vinylacetat-Copolymere, Ethylen-Vinylversatat-Copolymere oder Styrolacrylate genannt.
Vorzugsweise verwendet man als redispergierbares Dispersionspulver ein Polymer oder Copolymer mit einer Mindestfilmbildetemperatur (MFT) im Bereich von etwa -5 °C bis etwa +10 °C.

In einer bevorzugten Ausführungsform umfasst die bauchemische Formulierung zusätzlich mindestens ein Additiv in einer Menge von 0,01 bis 7 Gew.-%, vorzugsweise 0,1 bis 5 Gew.-%, bezogen auf die Gesamtmasse der Formulierung. Vorzugsweise ist das Additiv ausgewählt unter Verflüssigern, Abbindeverzögerern, Abbindebeschleunigern, Verdickern, Stabilisatoren, Kunststofffasern, Entschäumern, Luftporenbildnern, Dispergier-/Netzmitteln, Hydrophobierungsmittel und Mischungen davon.

Verflüssiger sind beispielsweise Casein, Melaminformaldehydkondensate oder Kammpolymere auf Basis von Poly(meth)acrylsäure mit Polyethylenoxidseitenketten (PCEs, Polycarboxylatether). Beispiele für Verdicker sind mineralische Schichtsilikate wie Bentonit oder Talkum. Stabilisatoren können organische Stabilisatoren beispielsweise Polysaccharide wie Stärkeether, Guar Gum, Xanthan Gum und Celluloseether und modifizierte Celluloseether, zum Beispiel Methylcellulose, Ethylcellulose, Propylcellulose und Methylethylcellulose, Hydroxylalkylcellulose wie Hydroxyethylcellulose (HEC), Hydroxypropylcellulose (HPC) und Hydroxyethylhydroxypropylcellulose, Alkylhydroxyalkylcellulose wie Methylhydroxyethylcellulose (MHEC), Methylhydroxypropylcelluose (MHPC) und Propylhydroxypropylcellulose, oder Polycarbonsäuren wie Polyacrylsäure sowie Polyvinylalkohole sein. Abbindeverzögerer sind beispielsweise Fruchtsäuren (Weinsäure oder Zitronensäure), Phosphate, Polyphosphate, Alkaligluconate, Saccharide oder Alkali-Tartrate. Geeignete Abbindebeschleuniger sind zum Beispiel Alkalicarbonate, Natriumsulfat, Kaliumsulfat oder Calciumsulfat-Dihydrat. Beispiele für Kunststofffasern sind Polyolefinfasern mit einer Länge von 0,1 bis 1 mm, insbesondere Polypropylenfasern. Weitere Beispiele hierfür sind Polyacrylnitrilfasern. Beispiele für Entschäumer sind modifizierte Siloxane auf anorganischen Trägermaterialien. Hydrophobierende Additive sind beispielsweise Salze langkettiger Fettsäuren oder Organosiliciumverbindungen.

Die Herstellung der erfindungsgemäßen bauchemischen Formulierungen (Pulverformulierung) erfolgt durch sukzessives Vermischen der Bestandteile in beliebiger Reihenfolge oder durch gleichzeitiges Vermischen in einer für diese Zwecke üblichen Mischvorrichtung.

Gegenstand der Erfindung ist auch die Verwendung der erfindungsgemäßen bauchemischen Formulierung zur Herstellung von dünnschichtigen Ausgleichsmassen (beispielsweise mit einer Schichtdicke von 0,5 bis 5 mm), selbstverlaufenden und standfesten Spachtelmassen, Estrichbindemitteln oder Estrichmörteln sowie als Fliesenklebemörtel, Fugenmörtel, oder Dichtungsschlämmen.

Bei Anwendung der erfindungsgemäßen bauchemischen Formulierung sind folgende vorteilhafte Vorteile zu erzielen: Schnelle Trocknung der Massen durch Ettringitbildung, bei der das freie Wasser einer Zusammensetzung (vor allem das Anmachwasser) als Kristallwasser in Ettringit gebunden wird. Durch die Steuerung der Ettringitbildung über einen Aktivator, kann das Abbinden der Bauprodukte zu einem definierten Zeitpunkt erfolgen. Bauprodukte basierend auf der erfindungsgemäßen bauchemischen Formulierung erhärten spannungsarm und innerhalb von weniger als 6 h wird die Belegreife erreicht.

Die folgenden Figuren und Beispiele dienen zur Erläuterung und Veranschaulichung der Erfindung.
**Figur 1** zeigt Schälwerte nach 1, 4, 7, 21 und 28 Tagen bei einer Verklebung von PVC auf verschiedene Spachtelmassen (Beispiel 1, sowie Vergleichsbeispiele Vgl. 1 bis Vgl. 4) 4 Stunden nach Applikation.
**Figur 2** zeigt Schälwerte nach 1, 4, 7, 21 und 28 Tagen bei einer Verklebung von Kautschuk auf verschiedene Spachtelmassen (Beispiel 1, sowie Vergleichsbeispiele Vgl. 1 und Vgl. 4) 4 Stunden nach Applikation.
**Figur 3** zeigt Schälwerte nach 1 und 4 Tagen bei einer Verklebung von PVC auf verschiedene Spachtelmassen (Beispiel 1, sowie Vergleichsbeispiele Vgl. 5 bis Vgl. 8) 4 Stunden nach Applikation.
**Figur 4** zeigt Schälwerte nach 1 und 4 Tagen bei einer Verklebung von Kautschuk auf verschiedene Spachtelmassen (Beispiel 1, sowie Vergleichsbeispiele Vgl. 5 bis Vgl. 8) 4 Stunden nach Applikation.

### Beispiele

### 1. Formulierungen

In Tabelle 1 sind Formulierungen für Spachtel-/Ausgleichsmassen auf Calciumsulfat-Basis angegeben. Dem erfindungsgemäßen Beispiel 1 sind die Vergleichsformulierungen Vgl. 1, Vgl. 2, Vgl. 3 und Vgl. 4 gegenübergestellt.

**Tabelle 1: Formulierungen und Anmachwasserbedarf für Spachtel-/Ausgleichsmassen auf Calciumsulfat-Basis.**

| | **Beispiel 1** | **Vgl. 1** | **Vgl. 2** | **Vgl. 3** | **Vgl. 4** |
|---|---|---|---|---|---|
| **Anteil [Gew.-%]** | | | | | |
| **Bindemittelsystem** | | | | | |
| Calciumsulfat-Halbhydrat | 46 | 50 | 50 | 46 | 46 |
| CSA-Zement | 7 | | | | 10 |
| OPC | 1 | | | 10 | |
| Sand | 15 | 17 | 17 | 18 | 18 |
| Kalksteinmehl | 28,5 | 30,5 | 30,5 | 23,5 | 23,5 |
| Verzögerer | 0,15 | | | 0,15 | 0,15 |
| Dispersionspulver | 1,5 | 1,5 | 1,5 | 1,5 | 1,5 |
| Sonstige Bestandteile¹ | 0,85 | 1,0 | 1,0 | 0,85 | 0,85 |
| Anmachwasserbedarf [%] bez. auf Pulvermasse | 19 | 24 | 19 | 19 | 19 |

| | | | | | |
|---|---|---|---|---|---|
| ¹Additive: Verflüssiger, Verdicker | | | | | |

OPC steht für Ordinary Portland Cement. Als CSA-Zement wurde CS10 der Firma Belith verwendet. Der Sand wies eine mittlere Korngröße von 0,01 bis 10 mm bei einem Quartzgehalt von mehr als 99% auf. Unter Kalksteinmehl ist natürliches, gemahlenes Calciumcarbonat mit einer Korngröße kleiner als 500 µm zu verstehen. Als Dispersionspulver wurde ein Ethylen-Vinylacetat-Copolymer mit einer MFT von 4°C eingesetzt. Als Verzögerer wurde Weinsäure eingesetzt.

### 2. Beurteilung der Belegreife

Die Belegreife eines Untergrunds entspricht dem Zeitraum zwischen Applikation der Ausgleichs-/Spachtelmasse und dem Zeitpunkt, ab dem eine funktionale Verklebung von Bodenbelägen möglich ist. Im Allgemeinen sind für eine funktionale, schadensfreie Beklebung Schälwerte größer als 0,6 N/mm nach 24 Stunden notwendig. Des Weiteren sollten sich diese Werte kontinuierlich erhöhen und vorzugsweise mindestens 1 N/mm (nach ca. 4-7 Tagen) betragen.

Zur Beurteilung der Belegreife wurden die Spachtel-/Ausgleichsmassen in einer Schichtstärke von 2,5 mm appliziert. Als Untergrund wurde ein trockener Betonuntergrund gewählt, welcher mit einer sperrenden 1-komponentigen Schnellgrundierung (UZIN PE 414 Turbo) und einem dispersionsbasierten Haftvermittler (Uzin PE 280) vorbehandelt wurde.

Die Beklebung mit dampfdichten Bodenbelägen erfolgte 4 Stunden nach Applikation der Spachtel-/Ausgleichsmasse. Zur Verklebung von PVC (Armstrong DLW Royal) wurde ein dispersionsbasierter Universalklebstoff (UZIN KE 2000 S) eingesetzt. Kautschuk-Beläge (Nora Noraplan Mega) wurden mit einem Nassbett-Dispersionsklebstoff (z.B. UZIN KE 66) verklebt. Anschließend wurden zu verschiedenen Zeiten nach der Verklebung Streifen (Breite: 5 cm) mittels einer Federwaage vom Untergrund abgeschält und so die Schälwerte (in N/mm) ermittelt.

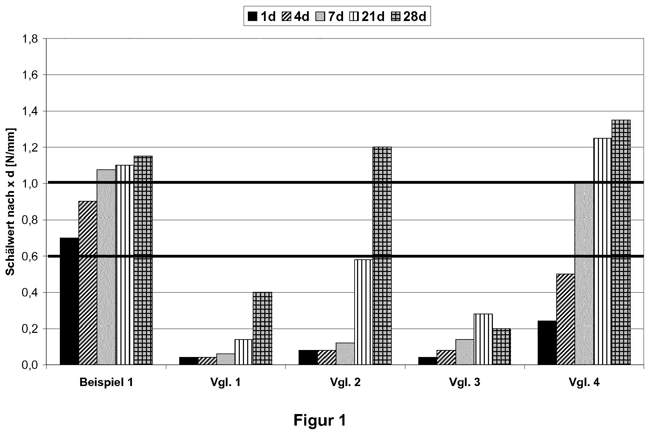

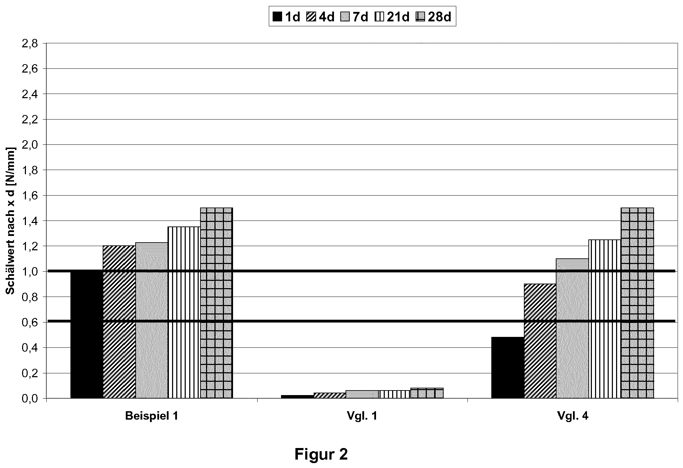

Wurde eine konventionelle Calciumsulfat-basierte Spachtel-/Ausgleichsmasse (Vgl. 1) 4 Stunden nach Applikation mit einem PVC-Belag beklebt, zeigte sich auch 28 Tage nach Verklebung ein maximaler Schälwert von nur ca. 0,4 N/mm (vgl. Figur 1). Dieser Wert ist für eine dauerhaft funktionale Verklebung nicht ausreichend. Eine weitere Indikation, dass ein solches Produkt 4 Stunden nach Applikation nicht belegreif ist, waren die äußerst geringen Schälwerte 24 Stunden bzw. 7 Tage nach Verklebung. Noch deutlicher wird dies bei der Verklebung von Kautschukbelägen (vgl. Figur 2). Hier wurden auch nach 28 Tagen kaum messbare Schälwerte (< 0,4 N/mm) erreicht.

Vergleichsbeispiel Vgl. 2 unterscheidet sich von der konventionellen Calciumsulfat-basierten Spachtel-/Ausgleichsmasse Vgl. 1 durch einen reduzierten Anmachwasserbedarf. Hierdurch wurde die Trocknung beschleunigt. Dies wurde durch die geringfügig höheren Schälwerte nach Verklebung von PVC ersichtlich. Die für eine funktionale, schadensfreie Beklebung notwendigen Schälwerte von größer als 0,6 N/mm nach 24 Stunden wurden für das Vergleichsbeispiel nicht erreicht.

Die Vergleichsbeispiele Vgl. 3 und Vgl. 4 zeigen, dass eine Belegreife von 4 Stunden nach Applikation erst durch den Einsatz des erfindungsgemäßen Bindemittelsystems (Beispiel 1) erreicht werden konnte. Der Zusatz von Portlandzement (Vgl. 3) und die damit einhergehende Erhöhung des pH-Werts im System führte zu keiner signifikanten Verbesserung der Schälwerte (Figur 1). Durch die mangelnde Konzentration an Al³⁺ bzw. Al(OH)₃ konnte nicht genügend Ettringit zur Bindung von überschüssigem Wasser gebildet werden.

Die Kombination eines Calciumsulfat-Bindemittels mit Calciumsulfoaluminatzement (Vgl. 4) führte in Abwesenheit von Portland Zement ebensowenig zu einer Belegreife nach 4 Stunden.

Die erfindungsgemäße Spachtelmasse (Beispiel 1), zeigte sowohl bei der Verklebung von PVC als auch Kautschuk deutlich höhere Schälwerte (Figur 1 und 2) als die Produkte der Vergleichsbeispiele. Durch die Kombination von Calciumsulfat-Halbhydrat mit Calciumsulfoaluminatzement und Portlandzement zur Einstellung des pH-Werts ≥ 9 konnte eine schnellere Trocknung der Spachtelmasse erreicht werden. Überschüssiges Wasser konnte fast vollständig in den sich bildenden Ettringitkristallen gebunden werden und musste nicht an die Umgebung abgegeben werden. Dadurch wurde die Restfeuchte in der Spachtelmasse rasch reduziert, so dass Wasser, welches durch den Klebstoff eingetragen wurde, kompensiert werden konnte.

Dadurch war eine funktionale Verklebung bereits 4 Stunden nach Applikation der Spachtelmasse möglich. Bereits 24 Stunden nach Verklebung wurden ausreichend hohe Schälwerte erreicht, welche sich im weiteren zeitlichen Verlauf weiter erhöhten. Sowohl bei der Verklebung von PVC als auch Kautschuk wurden Schälwerte > 1 N/mm bereits ca. 4 Tage nach der Verklebung erreicht.

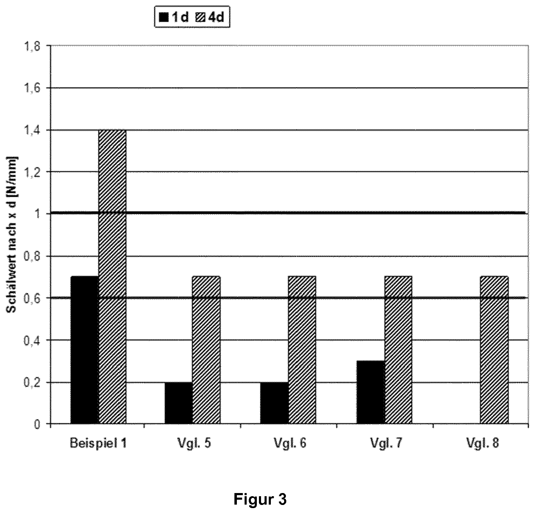

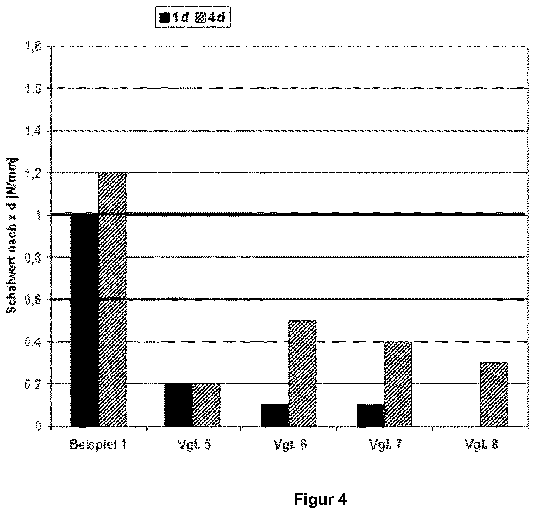

In einem weiteren Experiment wurden die Formulierung des Beispiels 1 und weitere Vergleichsformulierungen nach den oben beschriebenen Verfahren hergestellt und getestet. Als Bodenbelag wurden die oben beschriebenen PVC- und Kautschukbeläge verwendet. Die Vergleichsformulierungen repräsentieren die in der WO 2014/108435 und WO 2014/108436 beschriebenen Bindemittelzusammensetzungen. Die Zusammensetzungen der getesteten Formulierungen sind in der Tabelle 2 zusammengestellt, die Ergebnisse sind in den Figuren 3 und 4 graphisch dargestellt.

**Tabelle 2**

| | **Beispiel 1** | **Vgl. 5** | **Vgl. 6** | **Vgl. 7** | **Vgl. 8** |
|---|---|---|---|---|---|
| **Komponente** | **Anteil [Gew.-%]** | | | | |
| Calciumsulfat-Halbhydrat | 46 | 40 | 40 | 40 | 35,5 |
| CSA-Zement | 7 | | | | |
| Tonerdezement | | 5 | 5 | 5 | 3,5 |
| OPC | 1 | 8 | 8 | 8 | 6,5 |
| Metakaolin | | 5 | | 2,5 | 2,25 |
| Zeolith | | | 5 | 2,5 | 2,25 |
| Sand | 15 | 19,15 | 19,15 | 19,15 | 49,95 |
| Kalksteinmehl | 28,5 | 20 | 20 | 20 | |
| Verzögerer | 0,15 | 0,05 | 0,05 | 0,05 | |
| Dispersionspulver | 1,5 | 2,5 | 2,5 | 2,5 | |
| Sonstige Bestandteile¹ | 0,85 | 0,3 | 0,3 | 0,3 | 0,05 |
| | | | | | |
| Anmachwasserbedarf [%] bez. auf Pulvermasse | 19 | 20 | 20 | 20 | 25 |

| | | | | | |
|---|---|---|---|---|---|
| ¹ Additive: Verflüssiger, Verdicker | | | | | |

Den Figuren 3 und 4 ist zu entnehmen, dass bei Verwendung der erfindungsgemäßen Formulierung die Belegreife (Schälwert ≥ 0,6 N/mm²) sowohl bei der Verklebung von PVC- als auch Kautschukbelägen nach 1 Tag erreicht wird. Dagegen bei Verwendung der Formulierungen gemäß Stand der Technik die Belegreife bei der Verklebung von PVC-Belägen erst nach 4 Tagen und bei der Verklebung von Kautschukbelägen selbst nach 4 Tagen nicht erreicht.

## Patentansprüche

1. Bauchemische Formulierung, umfassend
a) 40 bis 55 Gew.-% mindestens eines Bindemittels auf Basis von Calciumsulfat;
b) 3 bis 10 Gew.-% mindestens eines Ettringitbildners;
c) 0,1 bis 2 Gew.-% mindestens eines Aktivators, um einen pH-Wert von 9 bis 14 in der bauchemischen Formulierung einzustellen; und
d) 8 bis 60 Gew.-% mindestens eines Füllstoffes;
e) 0,1 bis 10 Gew.-% mindestens eines redispergierbaren Dispersionspulvers
jeweils bezogen auf die Gesamtmasse der Formulierung,

2. Bauchemische Formulierung nach Anspruch 1, wobei das Bindemittel auf Basis von Calciumsulfat ausgewählt ist unter Calciumsulfat-α-Hemihydrat, Calciumsulfat-β-Hemihydrat, Anhydrit, Calciumsulfat-Dihydrat und Mischungen davon.

3. Bauchemische Formulierung nach einem der vorhergehenden Ansprüche, umfassend 41 bis 55 Gew.-% des Bindemittels auf Basis von Calciumsulfat.

4. Bauchemische Formulierung nach einem der vorhergehenden Ansprüche, wobei der Ettringitbildner ausgewählt ist unter Calciumsulfoaluminatzement (CSA-Zement), Natriumaluminat, Tonerdeschmelzzement, Aluminiumsulfat und Mischungen davon.

5. Bauchemische Formulierung nach einem der vorhergehenden Ansprüche, umfassend 3 bis 8 Gew.-% des Ettringitbildners.

6. Bauchemische Formulierung nach einem der vorhergehenden Ansprüche, wobei der Anteil an Calciumsulfatbindemittel und Ettringitbildner an der Gesamtformulierung 40-60 Gew.-% beträgt.

7. Bauchemische Formulierung nach einem der vorhergehenden Ansprüche, wobei der Aktivator ausgewählt ist unter Portland Zement, Calciumhydroxid, Natriumhydroxid, Kaliumhydroxid, Alkaliwassergläser und Mischungen davon.

8. Bauchemische Formulierung nach einem der vorhergehenden Ansprüche, zusätzlich enthaltend 0,01 bis 7 Gew.-% mindestens eines Additivs, bezogen auf die Gesamtmasse der Formulierung.

9. Bauchemische Formulierung nach Anspruch 8, wobei das Additiv ausgewählt ist unter Verflüssigern, Abbindeverzögerern, Abbindebeschleunigern, Verdickern, Stabilisatoren, Kunststoffasern, Dispergiermitteln, Netzmitteln, Entschäumern, Luftporenbildnern und Mischungen davon.

10. Bauchemische Formulierung nach einem der vorhergehenden Ansprüche, umfassend 0,5 bis 10 Gew.-% eines redispergierbaren Dispersionspulvers.

11. Bauchemische Formulierung nach einem der vorhergehenden Ansprüche, wobei das redispergierbaren Dispersionspulver ausgewählt ist unter Polymeren und Copolymeren von Vinylestern von C₁-C₁₅ Alkylcarbonsäuren, Copolymeren von Vinylestern von C₁-C₁₅ Alkylcarbonsäuren mit Olefinen oder Dienen oder Vinylhalogeniden oder Copolymeren von Estern der (Meth)acrylsäure mit C₁-C₁₂-Alkanolen mit Styrol.

12. Bauchemische Formulierung nach einem der vorhergehenden Ansprüche, umfassend 35 bis 55 Gew.-% des Füllstoffs.

13. Bauchemische Formulierung nach einem der vorhergehenden Ansprüche, wobei der Füllstoff ausgewählt ist unter Quarzsanden, Kalkstein und Kalksteinmehlen, Dolomit, Talk, Glimmer, sowie Leichtfüllstoffen.

14. Verwendung der bauchemischen Formulierung nach einem der vorhergehenden Ansprüche zur Herstellung von dünnschichtigen Ausgleichsmassen, selbstverlaufenden und standfesten Spachtelmassen, Estrichbindemitteln oder Estrichmörteln, Fliesenklebemörteln, Fugenmörteln und Dichtungsschlämmen.

## Claims

1. Construction chemistry preparation, comprising
a) 40 to 55 % by weight of at least one binder based on calcium sulphate;
b) 3 to 10 % by weight of at least one ettringite former;
c) 0.1 to 2 % by weight of at least one activator, so as to set a pH of 9 to 14 in the construction chemistry preparation; and
d) 8 to 60 % by weight of at least one filler;
e) 0.1 to 10 % by weight of at least one redispersable dispersion powder;
in each case based on the total mass of the preparation.

2. Construction chemistry preparation according to claim 1, wherein the binder based on calcium sulphate is selected among calcium sulphate α-hemihydrate, calcium sulphate β-hemihydrate, anhydrite, calcium sulphate dehydrate, and mixtures thereof.

3. Construction chemistry preparation according to any of the preceding claims, comprising 41 to 55 % by weight of the binder based on calcium sulphate.

4. Construction chemistry preparation according to any of the preceding claims, wherein the ettringite former is selected among calcium sulphoaluminate cement (CSA cement), sodium aluminate, high-alumina cement, aluminium sulphate and mixtures thereof.

5. Construction chemistry preparation according to any of the preceding claims, comprising 3 to 8 % by weight of the ettringite former.

6. Construction chemistry preparation according to any of the preceding claims, wherein the proportion of calcium sulphate binder and ettringite former out of the total preparation is 40-60 % by weight.

7. Construction chemistry preparation according to any of the preceding claims, wherein the activator is selected among Portland cement, calcium hydroxide, sodium hydroxide, potassium hydroxide, water-soluble alkali metal silicates, and mixtures thereof.

8. Construction chemistry preparation according to any of the preceding claims, additionally containing 0.01 to 7 % by weight of at least one additive, based on the total mass of the preparation.

9. Construction chemistry preparation according to claim 8, wherein the additive is selected among plasticisers, setting retardants, setting accelerants, thickeners, stabilisers, plastics material fibres, dispersants, wetting agent, anti-foaming agents, air-entraining agent, and mixtures thereof.

10. Construction chemistry preparation according to any of the preceding claims, comprising 0.5 to 10 % by weight of a redispersable dispersion powder.

11. Construction chemistry preparation according to any of the preceding claims, wherein the redispersable dispersion powder is selected among polymers and copolymers of vinyl esters of C₁-C₁₅ alkyl carboxylic acids, copolymers of vinyl esters of C₁-C₁₅ alkyl carboxylic acids or dienes or vinyl halides or copolymers of esters of (meth)acrylic acid with C₁-C₁₂ alkanols with styrene.

12. Construction chemistry preparation according to any of the preceding claims, comprising 35 to 55 % by weight of the filler.

13. Construction chemistry preparation according to any of the preceding claims, wherein the filler is selected among quartz sands, limestone and limestone powders, dolomite, talc, mica, and lightweight fillers.

14. Use of the construction chemistry preparation according to any of the preceding claims for producing thin-layer levelling compounds, self-levelling and stable putties, screed binders or screed mortars, tile adhesive mortars, grouts and waterproofing slurries.

## Revendications

1. Formulation chimique pour le bâtiment, comprenant :
a) de 40 à 55 % en poids d'un liant à base de sulfate de calcium ;
b) de 3 à 10 % en poids d'au moins un produit formant de l'ettringite ;
c) de 0,1 à 2 % en poids d'au moins un activateur, pour régler la pH entre 9 et 14 dans la formulation chimique pour le bâtiment ; et
d) de 8 à 60 % en poids d'au moins une charge ;
e) de 0,1 à 10 % en poids d'une poudre de dispersion redispersible,
respectivement par rapport à la masse totale de la formulation.

2. Formulation chimique pour le bâtiment selon la revendication 1, dans laquelle le liant à base de sulfate de calcium est choisi parmi du sulfate de calcium hémihydraté α, le sulfate de calcium hémihydraté β, de l'anhydrite, du sulfate de calcium dihydraté et des mélanges de ceux-ci.

3. Formulation chimique pour le bâtiment selon l'une des revendications précédentes, comprenant de 41 à 55 % en poids de liant à base de sulfate de calcium.

4. Formulation chimique pour le bâtiment selon l'une des revendications précédentes, dans laquelle le produit formant de l'ettringite est choisi parmi un ciment de sulfoaluminate de calcium (ciment CSA), l'aluminate de sodium, le ciment alumineux, le sulfate d'aluminium et des mélanges de ceux-ci.

5. Formulation chimique pour le bâtiment selon l'une des revendications précédentes, comprenant de 3 à 8 % en poids de produit formant de l'ettringite.

6. Formulation chimique pour le bâtiment selon l'une des revendications précédentes, dans laquelle la proportion de liant à base de sulfate de calcium et d'ettringite dans la formulation totale est de 40 à 60 % en poids.

7. Formulation chimique pour le bâtiment selon l'une des revendications précédentes, dans laquelle l'activateur est choisi parmi le ciment Portland, l'hydroxyde de calcium, l'hydroxyde de sodium, l'hydroxyde de potassium, les ortho silicates alcalins et des mélanges de ceux-ci.

8. Formulation chimique pour le bâtiment selon l'une des revendications précédentes, contenant en supplément de 0,01 à 7 % en poids d'au moins un additif, par rapport à la masse totale de la formulation.

9. Formulation chimique pour le bâtiment selon la revendication 8, dans laquelle l'additif est choisi parmi des liquéfacteurs, des accélérateurs de prise, des épaississants, des stabilisants, des fibres synthétiques, des dispersants, des agents mouillants, des agents anti-mousse, des agents porogènes et des mélanges de ceux-ci.

10. Formulation chimique pour le bâtiment selon l'une des revendications précédentes, comprenant de 0,5 à 10 % en poids d'une poudre de dispersion redispersible.

11. Formulation chimique pour le bâtiment selon l'une des revendications précédentes, dans laquelle la poudre de dispersion redispersible est choisie parmi des polymères et des copolymères d'esters vinyliques d'acides carboniques d'alkyles en C₁ à C₁₅, des copolymères d'esters vinyliques d'acides carboniques d'alkyles en C₁ à C₁₅ avec des oléfines ou des diènes ou des halogénures de vinyle ou des copolymères d'esters de l'acide (méth) acrylique avec des alcanols en C₁ à C₁₂ avec du styrène.

12. Formulation chimique pour le bâtiment selon l'une des revendications précédentes, comprenant de 35 à 55 % en poids de charges.

13. Formulation chimique pour le bâtiment selon l'une des revendications précédentes, dans laquelle les charges sont choisies parmi des sables de quartz, du calcaire et des poudres de calcaire, de la dolomite, du talc, du mica, ainsi que des charges légères.

14. Utilisation de la formulation chimique pour le bâtiment selon l'une des revendications précédentes pour la fabrication de ragréages en couches minces, de mastics auto-nivelants et stables, de liants de chapes et de mortiers de chapes, de mortier-colles pour carrelages, de mortier de jointement et d'enduits d'étanchéité.
